# EUROPÄISCHE PATENTANMELDUNG

(11) **EP 0 838 822 A1**
(43) Veröffentlichungstag der Anmeldung: **29.04.1998**
(21) Anmeldenummer: 97118449.4
(22) Anmeldetag: 23.10.1997
(51) Int. Cl.: G11B 33/04

(54) **Verpackung für scheibenförmige, optische Speicherplatten, insbesondere Compact Discs**

(30) Priorität: 23.10.1996 DE 29618517 U
(71) Anmelder: Dinkhauser Kartonagen GmbH, 6060 Hall in Tirol (AT)
(72) Erfinder: Seilern, Stefan, Prof., 6401 Hatting (AT)
(74) Vertreter: Weber, Joachim, Dr.

(57) **Zusammenfassung**

Die Erfindung betrifft eine Verpackung (1) für eine scheibenförmige, optische Speicherplatte (2), insbesondere eine Compact Disc.

Zur Verbesserung der Handhabbarkeit der Speicherplatte (2) weist die erfindungsgemäße Verpackung (1) eine Halteeinrichtung (3), ein Bodenteil (4) und ein Umschlagteil (5) auf. Hierbei ist die Halteeinrichtung (3) derart angeordnet, daß sie im Zuge des Aufklappens des Umschlagteils (5) vom geschlossenen Zustand in einen geöffneten Zustand bewegt werden kann, indem sie aus der Ebene des Bodenteils (4) herausgehoben ist.

## Beschreibung

Die Erfindung betrifft eine Verpackung für eine scheibenförmige, optische Speicherplatte, insbesondere eine Compact Disc, nach dem Oberbegriff des Anspruchs 1.

Unter dem Begriff "optische Speicherplatten" werden heute hauptsächlich Audio-Compact-Discs (CD's), CD-I's und CD-ROM's sowie Disketten (z.B. 3,5 Zoll Disketten) verstanden, welche in Computern verwendet werden.

Eine dem Oberbegriff des Anspruchs 1 entsprechende Verpackung, die derzeit wohl noch die gängigste Verpackung für derartige Speicherplatten bzw. Speichermedien darstellt, weist eine Halteeinrichtung in Form einer Kunststoffplatte auf, in deren Mitte ein Kronenaufnehmer angeordnet ist. An diesem Kronenaufnehmer wird die Speicherplatte mit ihrem Mittelloch festgeklemmt. Die Halteeinrichtung ist auf einem üblicherweise aus Karton bestehenden Bodenteil befestigt, an dem wiederum ein Umschlagteil klappbar angeordnet ist. Wenn das Umschlagteil von der geöffneten Stellung in die geschlossene Stellung geklappt wird, liegt es auf der Halteeinrichtung auf, so daß das Bodenteil und das Umschlagteil in diesem geschlossenen Zustand die Halteeinrichtung und damit die an ihr befestigte Speicherplatte umgeben.

Einer der Nachteile der gattungsgemäßen Verpackung ist der Umstand, daß diese aus zumindest zwei verschiedenen Materialien (Kunststoff- und Kartonmaterial) hergestellt ist, was die Recyclebarkeit beeinträchtigt. Ferner geht die Entnahme der Speicherplatte aus der Halteeinrichtung häufig mit relativ großen Biegebeanspruchungen der Speicherplatte einher, da diese relativ fest am Kronenaufnehmer der Halteeinrichtung fixiert ist. Um eine Entnahme überhaupt möglich zu machen, weist die Kunststoffplatte in ihren Eckbereichen üblicherweise Einbuchtungen auf, in die man beim Entnehmen mit dem Finger eingreifen muß, um die Speicherplatte überhaupt greifen zu können.

Um diese Probleme zu lösen, sind anders gestaltete Verpackungen vorgeschlagen worden, die beispielsweise in dem deutschen Gebrauchsmuster G 9307309.7 und dem deutschen Gebrauchsmuster G 9405421.5 beschrieben sind. Diese Verpackungen sollen zwar eine Einstofflichkeit ermöglichen, sind jedoch in ihrem Aufbau und folglicherweise in ihrer Herstellung relativ aufwendig.

Es ist daher Aufgabe der vorliegenden Erfindung, eine Verpackung der im Oberbegriff des Anspruchs 1 genannten Art zu schaffen, die einfach aufgebaut ist und die die Handhabung beim Einsetzen und Entnehmen der Speicherplatte erleichtert.

Die Lösung dieser Aufgabe erfolgt durch die Merkmale des Anspruchs 1.

Die erfindungsgemäße Verpackung weist eine Halteeinrichtung für die Speicherplatte, ein Bodenteil sowie ein Umschlagteil auf. Das Umschlagteil und das Bodenteil sind unter Bildung einer Klappverbindung aneinander befestigt. Diese Klappverbindung ermöglicht es, daß das Umschlagteil und das Bodenteil zwischen einer geschlossenen Stellung und einer offenen Stellung verschwenkt werden können. In der geschlossenen Stellung ist das Umschlagteil in Richtung auf das Bodenteil um deren Schwenk- bzw. Klappverbindung herum geschwenkt, so daß das Bodenteil und das Umschlagteil in diesem geschlossenen Zustand die Halteeinrichtung (nach Art einer Sandwich-Anordnung) umgeben. Die Halteeinrichtung ist in diesem Zustand also zwischen dem Umschlagteil und dem Bodenteil angeordnet, so daß diese die Halteeinrichtung und die darin angeordnete Speicherplatte schützend umgeben. Gemäß den Prinzipien vorliegender Erfindung ist die Halteeinrichtung derart angeordnet, daß sie im Zuge des Aufklappens des Umschlagteils vom geschlossenen Zustand in den geöffneten Zustand aus der Ebene des Bodenteils herausbewegt wird. Im geöffneten Zustand bilden das Bodenteil, das Umschlagteil und die Halteeinrichtung somit (im Gegensatz zu den bekannten Verpackungen) eine räumliche Anordnung, was den besonderen Vorteil ergibt, daß die Zugänglichkeit der Speicherplatte zum Entnehmen und natürlich auch zum Einlegen in die erfindungsgemäße Verpackung beträchtlich vereinfacht wird. Denn dadurch, daß die Halteeinrichtung aus der Ebene des Bodenteils herausbewegt wird, kann die Speicherplatte im geöffneten Zustand der Verpackung viel leichter ergriffen und aus der Verpackung herausgenommen werden, als dies bei den bekannten Verpackungen der Fall ist.

Darüber hinaus ergibt sich als weiterer Vorteil, daß die erfindungsgemäße Verpackung im geöffneten Zustand bzw. im Zuge ihrer Öffnung, beispielsweise die werbemäßige Darstellung der Speicherplatte, markant unterstützt, da der Öffnungsvorgang mit der Bewegung der Halteeinrichtung vom Bodenteil weg einhergeht. Dies ergibt eine besonders vorteilhafte und überraschende optische Wirkung.

Die Unteransprüche haben vorteilhafte Weiterbildungen der Erfindung zum Inhalt.

Bei einer bevorzugten Ausführungsform ist die Halteeinrichtung eine Anordnung aus einer Tragplatte und einer daran über eine Schwenk- bzw. Klappverbindung angebrachte Stützplatte. Die Tragplatte dient als Auflage für die Speicherplatte und ist an ihrem freien Ende mit dem Umschlagteil verbunden. Die Stützplatte ist, wie gesagt, über eine Klappverbindung an einer ihrer Kanten mit der Speicherplatte verbunden und an der anderen freien Kante am Bodenteil fixiert. Im geschlossenen Zustand klappt die Stützplatte auf die Trägerplatte und zwar auf der der Auflageseite für die Speicherplatte gegenüberliegenden Seite. Es ergibt sich mithin eine vollständig flache Konfiguration, die die Dicke der Verpackung praktisch nicht beeinflußt. Beim Öffnen der Verpackung wird das Umschlagteil um die Schwenkverbindung herum vom Bodenteil weggeklappt. Da die Trägerplatte am Umschlagteil fixiert ist, nimmt dieses die Trägerplatte beim Aufklappen mit. Es ergibt sich hierbei ein Schwenkvorgang, bei dem sich die Stützplatte von der Trägerplatte löst und in einen aufgerichteten Zustand überführt wird. Somit wird die auf der Trägerplatte liegende Speicherplatte ebenfalls angehoben, wobei sich bei entsprechender Dimensionierung und Fixierung von Trägerplatte und Speicherplatte am Bodenteil bzw. Umschlagteil vorzugsweise eine Hubbewegung der auf der Trägerplatte liegenden Speicherplatte ergibt, die die Speicherplatte, zumindest in etwa, stets parallel zum Bodenteil hält. Vorzugsweise ist die Anordnung so getroffen, daß das Umschlagteil durch das Gewicht der Speicherplatte und der Halteeinrichtung und deren Anordnung relativ vom Umschlagteil und zum Bodenteil im geöffneten Zustand der Verpackung in einer aufrechten Stellung gehalten wird. Somit kann die Speicherplatte randseitig problemlos ergriffen und von der Halteeinrichtung abgehoben werden.

Um die Lagerung der Speicherplatte auf der Trägerplatte zu verbessern, kann vorzugsweise eine Haltelasche auf der Trägerplatte angeordnet sein.

Bei einer alternativen Ausführungsform der Erfindung ist die Halteeinrichtung als Einstecktasche für die Speicherplatte ausgebildet.

Die Einstecktasche ist hierbei vorzugsweise als Faltkonstruktion ausgebildet, bei der zwei identisch ausgebildete Materiallagen aufeinander gefaltet werden und an einer Seite eine Einstecköffnung aufweisen, in die die Speicherplatte eingeführt werden kann. Natürlich ist die Dimensionierung der Einstecktasche von der Größe und Form der jeweiligen Speicherplatte abhängig und an diese angepaßt. Bei dieser Ausführungsform ist die Einstecktasche mit einem Mitnehmer verbunden, der die Einstecktasche zwischen einer Ruhestellung und einer aus der Ebene des Bodenteils herausbewegten Stellung betätigt. In der Ruhestellung sind das Bodenteil und das Umschlagteil aufeinandergeklappt und umgeben und schützen die Einstecktasche mit der darin angeordneten Speicherplatte. Im Zuge des Umklappens des Umschlagteils betätigt der an diesem und der Einstecktasche befestigte Mitnehmer die Einstecktasche, so daß diese aus ihrer Ruhestellung in die geöffnete Stellung bzw. Entnahmestellung herausbewegt, vorzugsweise geschwenkt, wird. In dieser Stellung ist die Speicherplatte wiederum aus der Ebene des Bodenteils herausbewegt und kann problemlos aus der Einstecktasche entnommen werden.

Um die Entnahme der Speicherplatte noch weiter zu vereinfachen, kann die Einstecktasche eine Entnahmeausnehmung aufweisen, die es ermöglicht, die Speicherplatte, beispielsweise mit einer Fingerspitze, durch Eingriff in ihre mittige Öffnung zu entnehmen.

Als Mitnehmer kann bei einer besonders bevorzugten Ausführungsform ein mittig gefalzter Materialstreifen verwendet werden. Der Materialstreifen ist beispielsweise rechteckförmig ausgebildet und in seiner Längsmittellinie gefalzt. Eine parallel zur Falzlinie freie Kante wird am Umschlagteil fixiert und die andere parallel zur Mittellinie liegende freie Kante wird an der Einstecktasche fixiert. Die Fixierung erfolgt hierbei so, daß die Falzlinie des Materialstreifens deckungsgleich zur Falzlinie zwischen Bodenteil und Umschlagteil angeordnet ist.

Im geschlossenen Zustand liegen die beiden Hälften des Materialstreifens flach aufeinander, so daß bei dieser Konstruktion die Dicke der Verpackung nur wenig beeinflußt wird. Im Zuge des Öffnens, also beim Abklappen des Umschlagteils vom Bodenteil, betätigt der Mitnehmer die Einstecktasche und bewegt diese dadurch aus ihrer auf das Bodenteil geklappten Stellung in eine in etwa aufrechte Stellung, in der die Einstecktasche somit vorzugsweise zumindest ungefähr einen Winkel von 90° zum Bodenteil und ggf. zum Umschlagteil einnimmt.

Bei einer weiteren alternativen Ausführungsform ist der Mitnehmer aus zwei symmetrisch ausgebildeten Mitnehmerteilen aufgebaut. Die Mitnehmerteile sind über eine Falzung gelenkig bzw. klappbar miteinander verbunden. Ein Mitnehmerteil ist am Bodenteil und das andere Mitnehmerteil ist am Umschlagteil fixiert. Am diesen Fixierungsteilen gegenüberliegenden Ende weist jedes Mitnehmerteil eine Mitnehmernase auf. Die Mitnehmernasen sind benachbart zueinander angeordnet und begrenzen somit einen Führungsschlitz. In der Einstecktasche ist eine Ausnehmung, vorzugsweise eine viertelkreisförmige Ausnehmung, angeordnet. Diese Ausnehmung weist eine Führungskante auf, die durch entsprechende Anordnung des Mitnehmerteils in den Führungsschlitz eingreift.

Beim Zusammenklappen der erfindungsgemäßen Verpackung, also beim Umklappen des Umschlagteils um seine Gelenkverbindung mit dem Bodenteil auf dasselbe, legen sich die beiden Mitnehmerteile aufeinander, in welchem Zustand sie sich jeweils an die Einstecktasche anlegen. Somit wird auch bei dieser Anordnung die Dicke der Verpackung wenig beeinflußt. Im Zuge des Aufklappens der Verpackung wandert der Führungsschlitz entlang der Führungskante und bewegt somit die Einstecktasche von der auf das Bodenteil geklappten Stellung in eine aufrechte Stellung, in der die Einstecktasche wiederum vorzugsweise einen Winkel von zumindest ungefähr 90° zum Bodenteil und zum Umschlagteil einnimmt.

Alle zuvor genannten Ausführungsformen können bei einer besonders bevorzugten Ausbildung mit einem zusätzlichen Deckelteil versehen werden, das über eine Klapp- bzw. Schwenkverbindung am Bodenteil fixierbar ist. Dieses Deckelteil dient als zusätzlicher Schutz und seine Außenseite kann als Sichtfläche für Aufdrucke und ähnliches verwendet werden.

Weiterhin sind bei einer besonders bevorzugten Ausführungsform alle zuvor erläuterten Komponenten der erfindungsgemäßen Verpackung aus einem Material hergestellt, das vorzugsweise Kartonmaterial ist.

Die Verpackungszuschnitte sind bei allen zuvor genannten Ausführungsformen vorzugsweise einteilig.

Weitere Einzelheiten, Merkmale und Vorteile der Erfindung ergeben sich aus nachfolgender Beschreibung von Ausführungsbeispielen anhand der Zeichnung. Es zeigt:
- Fig. 1: eine Draufsicht auf einen Verpackungszuschnitt eines ersten Ausführungsbeispiels der erfindungsgemäßen Verpackung;
- Fig. 2: eine perspektivische Ansicht der Verpackung des ersten Ausführungsbeispiels im aufgeklappten Zustand;
- Fig. 3: eine Draufsicht auf die Verpackung von Fig. 2;
- Fig. 4: eine Draufsicht auf einen Verpackungszuschnitt eines zweiten Ausführungsbeispiels der erfindungsgemäßen Verpackung;
- Fig. 5: eine perspektivische Ansicht der Verpackung des zweiten Ausführungsbeispiels;
- Fig. 6: eine Seitenansicht der Fig. 5;
- Fig. 7: eine Draufsicht auf einen Verpackungszuschnitt eines dritten Ausführungsbeispiels der erfindungsgemäßen Verpackung;
- Fig. 8: eine perspektivische Ansicht der Verpackung des dritten Ausführungsbeispiels;
- Fig. 9: eine Seitenansicht von Fig. 8; und
- Fig. 10: eine Vorderansicht von Fig. 8.

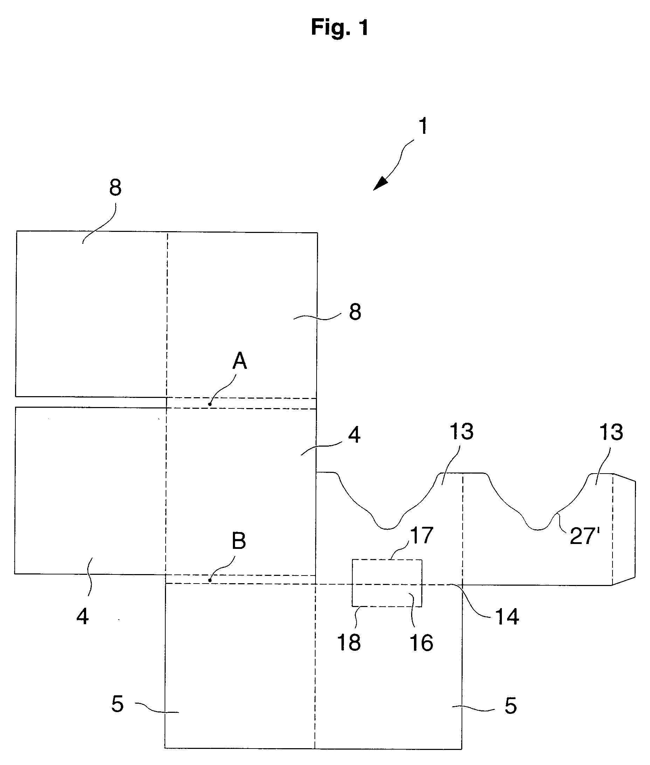

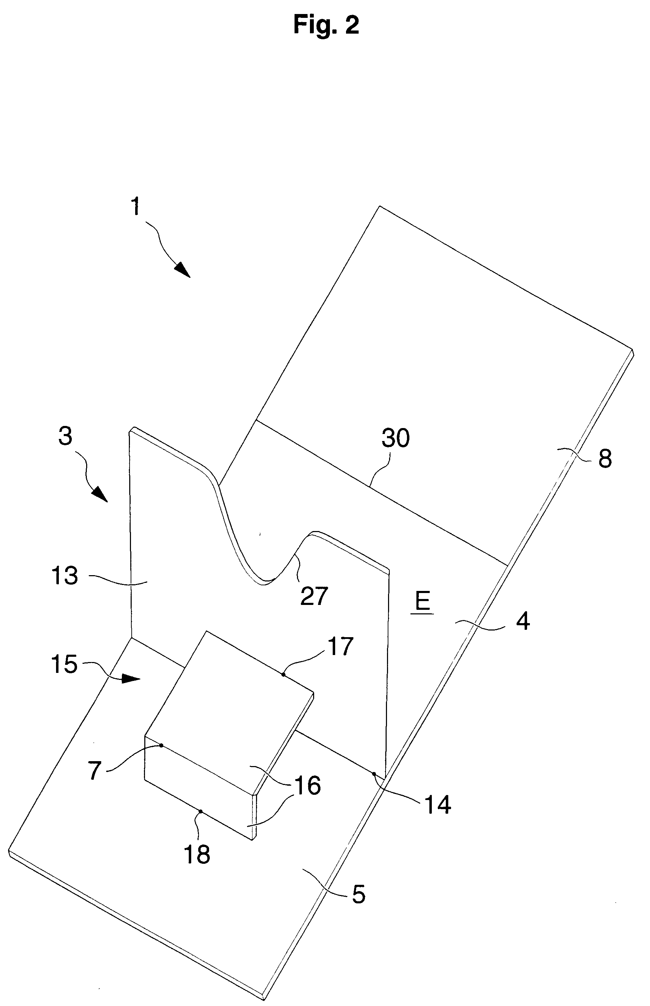

In den Fig. 1 bis 3 ist ein erstes Ausführungsbeispiel der erfindungsgemäßen Verpackung sowie von deren Verpackungszuschnitt dargestellt. Wie insbesondere aus Fig. 2 ersichtlich, weist die Verpackung 1 einen Umschlagteil 5 und einen sich daran anschließenden Bodenteil 4 auf. An den Bodenteil 4 schließt sich wiederum ein Deckelteil 8 an. Zwischen Bodenteil 4 und Umschlagteil 5 erstreckt sich entlang einer Falzlinie 14 eine Halteeinrichtung 3, welche beim ersten Ausführungsbeispiel aus einer Einstecklasche 13 besteht. Die Einstecklasche 13 ist mit einem Mitnehmer 15 verbunden, der die Einstecklasche 13 zwischen einer Ruhestellung im aufeinandergeklappten Zustand vom Bodenteil 4 und Umschlagteil 5 und einer aus der Ebene E des Bodenteils 4 herausbewegbaren Stellung betätigt. Im aufgeklappten Zustand nimmt die Einstecktasche 13 einen im wesentlichen senkrechten Winkel zum Bodenteil 4 und zum Umschlagteil 5 ein.

Der Mitnehmer 15 besteht aus einem mittig gefalteten Materialstreifen 16, der mit einer freien Kante 17 an der Einstecktasche 13 und mit seiner anderen freien Kante 18 am Umschlagteil 5 befestigt ist. Hierbei sind die Kanten 7, 14, 17 und 18 jeweils parallel zueinander angeordnet und der Abstand der Kanten 14 und 17 entspricht dem Abstand der Kanten 7 und 18.

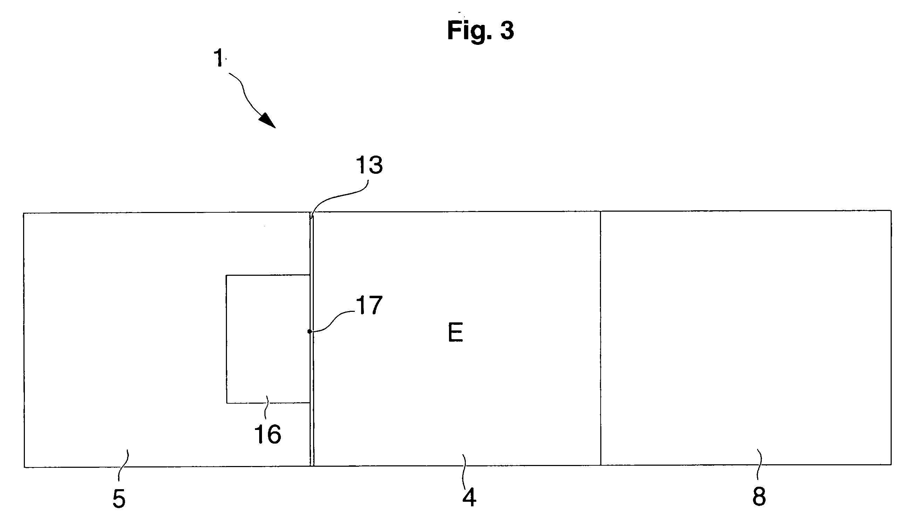

Schließlich ist die Einstecktasche 13 noch mit einer Eingriffsausnehmung 27 ausgebildet, welche eine einfache Entnahme einer Speicherplatte 2 bzw. einer CD ermöglicht. Diese Eingriffsausnehmung 27 kann natürlich unterschiedlich ausgestaltet werden, wie etwa auch durch 27' in Fig. 1 dargestellt ist. In den Fig. 2 und 3 ist die erfindungsgemäße Verpackung 1 des ersten Ausführungsbeispiels im aufgeklappten Zustand dargestellt. Soll nunmehr nach dem Einfügen einer CD in die Einstecktasche 13 die Verpackung 1 zusammengeklappt werden, wird zuerst das Umschlagteil 5 auf das Bodenteil 4 geklappt, so daß sich die Einstecktasche 13 von ihrer senkrechten Position relativ zum Bodenteil 4 in die Ebene des Bodenteils 4 bewegt. Anschließend muß noch der Deckelteil 8 entlang der Faltlinie 30 auf den Umschlagteil 5 geklappt werden und der Verpackungsendzustand bzw. zusammengeklappte Zustand der Verpackung 1 ist erreicht.

Fig. 1 zeigt den Verpackungszuschnitt des ersten Ausführungsbeispiels der erfindungsgemäßen Verpackung 1. Hierbei bezeichnen die gestrichelten Linien die Faltlinien. Wie aus dieser Figur ersichtlich, bestehen das Bodenteil 4, das Umschlagteil 5 und das Deckelteil 8 aus jeweils zwei symmetrischen Elementen, welche im zusammengefalteten Zustand jeweils die einzelnen Bauteile 4, 5 und 8 bilden. Die Einstecktasche 13 besteht in analoger Form aus zwei Komponenten 13, wobei in Fig. 1 die rechte Komponente 13 mit einer zusätzlichen Lasche entlang einer Faltlinie ausgebildet ist, welche im gefalteten Zustand eine feste Verbindung, etwa durch Verkleben, mit der anderen Komponente 13 ermöglicht. Des weiteren ist in Fig. 1 die linke Komponente 13 fest mit der einen Hälfte des Bodenteils 4 verbunden, wird jedoch vor dem Faltvorgang der Verpackung 1 von der Bodenteilhälfte 4 abgetrennt. Schließlich ist zwischen dem Deckelteil 8 und dem Bodenteil 4 sowie dem Bodenteil 4 und dem Umschlagteil 5 ein durch jeweils zwei gestrichelte Linien gekennzeichneter Abschnitt A und B ausgebildet, welcher ein leichteres Umklappen der Teile 5 und 8 auf das Bodenteil 4 ermöglicht, da die Abschnitte A und B im Gegensatz zu den Teilen 4, 5 und 8 nicht durch symmetrische Komponenten im gefalteten Zustand verstärkt werden. Die Verbindung der jeweils symmetrischen Elemente bzw. Komponenten kann in einfacher Form durch Verkleben vorgenommen werden. Auch andere Verbindungsverfahren sind natürlich denkbar.

Schließlich wird darauf hingewiesen, daß der Verpackungszuschnitt einteilig ausgebildet ist und aus einem Material wie etwa Karton bestehen.

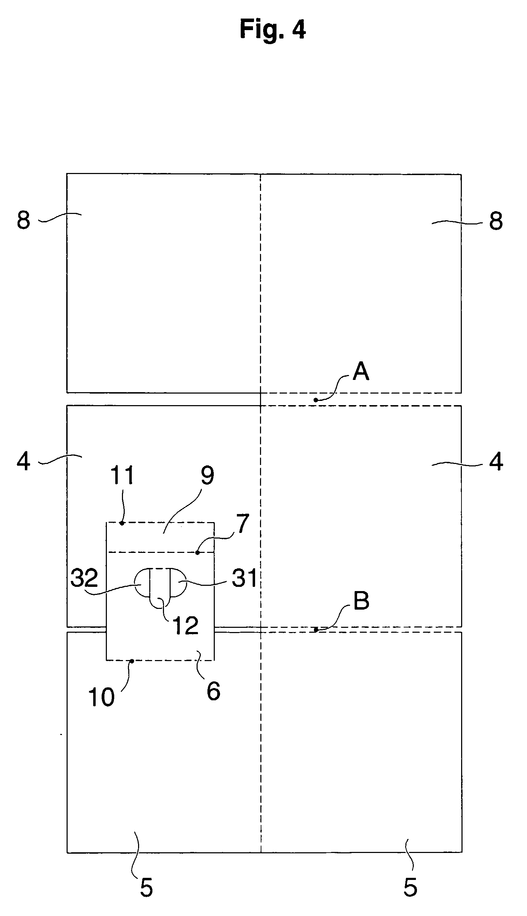

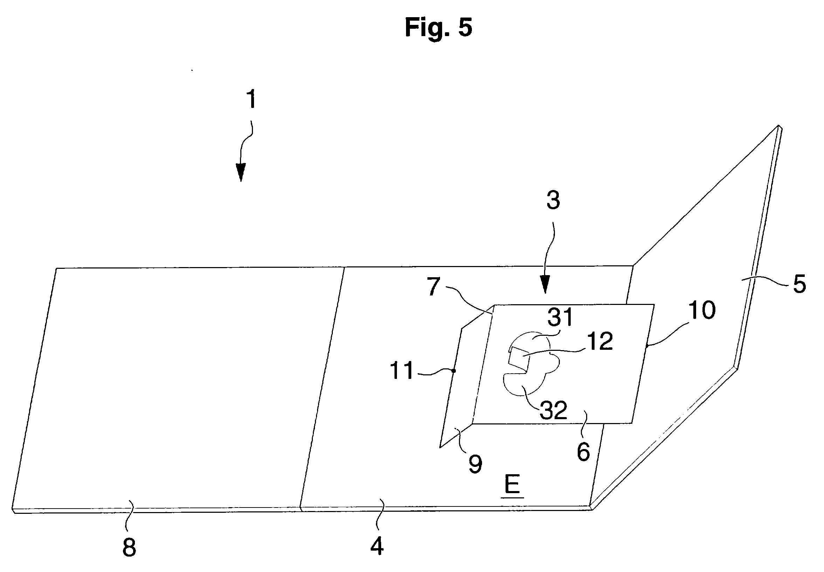

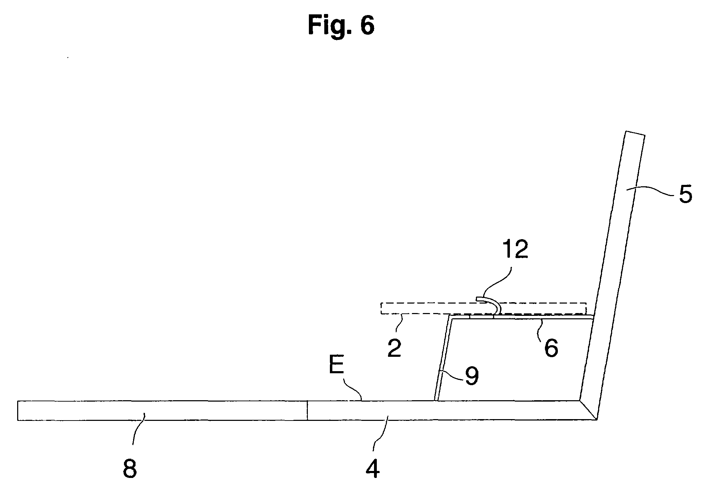

In den Fig. 4 bis 6 ist ein weiteres Ausführungsbeispiel der erfindungsgemäßen Verpackung dargestellt. Auch bei diesem Ausführungsbeispiel weist die Verpackung 1 ein Bodenteil 4, ein Umschlagteil 5 oder ein Deckelteil 8 auf. Diese Bauteile bestehen analog zu dem ersten Ausführungsbeispiel aus zusammengefalteten symmetrischen Elementen, wie insbesondere aus Fig. 4 ersichtlich ist. Zudem ist eine Halteeinrichtung 3 für eine in Fig. 6 gestrichelt dargestellte Speicherplatte 2 sowohl am Bodenteil 4 als auch am Umschlagteil 5 befestigt. Die Halteeinrichtung 3 weist eine Trägerplatte 6 und eine daran entlang der Falzkante 7 klappbar angebrachte Stützplatte 9 auf. Die Trägerplatte 6 mit ihrer der Falzkante 7 gegenüber angeordneten freien Kante 10 ist am Umschlagteil 5 befestigt. Gleichzeitig ist die freie Kante 11 der Stützplatte 9 am Bodenteil 4 befestigt. Wie insbesondere den Fig. 4 und 6 entnehmbar, entspricht die Höhe der Stützplatte 9 dem Abstand der Kante 10 zur Faltlinie zwischen Umschlagteil 5 und Bodenteil 4. Durch diese spezielle geometrische Ausgestaltung der Halteeinrichtung 3 findet zwischen der Trägerplatte 6 und dem Bodenteil 4 während des Auf- und Zuklappens des Umschlagteils 5 immer eine Parallelbewegung statt. Demgemäß besteht keine Gefahr, daß eine auf der Trägerplatte 6 befindliche Speicherplatte 2 bzw. CD durch eine Schrägstellung der Trägerplatte 6 relativ zum Bodenteil 4 wiederum von der Trägerplatte 6 gleitet.

In der Trägerplatte ist zusätzlich eine Haltelasche 12 ausgebildet, die durch die Mittelöffnung einer CD oder einer Speicherplatte 2 hindurchgesteckt und umgeklappt wird, um eine Fixierung der CD auf der Trägerplatte 6 zu erzielen. Zusätzlich ist in Fig. 4 links und rechts von der Haltelasche 12 jeweils eine Ausnehmung 31 und 32 ausgebildet, welche einen einfachen Zugriff zur Haltelasche 12 während der Fixierung der CD durch die Haltelasche 12 ermöglichen.

Auch bei diesem Ausführungsbeispiel ist die erfindungsgemäße Verpackung 1 im aufgeklappten Zustand dargestellt. Wird jedoch die aufgeklappte Verpackung 1 verschlossen, muß zuerst das Umschlagteil 5 in die Ebene E des Bodenteils 4 und anschließend der Deckelteil 8 wiederum auf das Umschlagteil 5 geklappt werden.

Analog dem ersten Ausführungsbeispiel ist auch der in Fig. 4 dargestellte Verpackungszuschnitt des zweiten Ausführungsbeispiels einteilig ausgebildet. Zudem sind wiederum Abschnitte A und B vorgesehen, welche beim Faltvorgang des Verpackungszuschnitts nicht durch ein symmetrisches Element verstärkt werden und somit ein leichteres Auf- und Zuklappen einer fertiggestellten Verpackung ermöglichen. Der Faltvorgang der erfindungsgemäßen Verpackung 1 des zweiten Ausführungsbeispiels ist, wie aus Fig. 4 ersichtlich, im Gegensatz zum ersten Ausführungsbeispiel in einfacherer Form durchführbar, da lediglich die rechte Hälfte von Fig. 4 relativ zur Zeichenebenen nach unten auf die linke Hälfte gefaltet und mit der linken Hälfte verbunden werden muß. Auch bei diesem Ausführungsbeispiel bietet sich ein Verkleben der jeweils symmetrischen Komponenten des Bodenteils 4, des Umschlagteils 5 und des Deckelteils 8 an. Schließlich kann auch dieser Verpackungszuschnitt aus einem Material, wie etwa Karton, hergestellt werden.

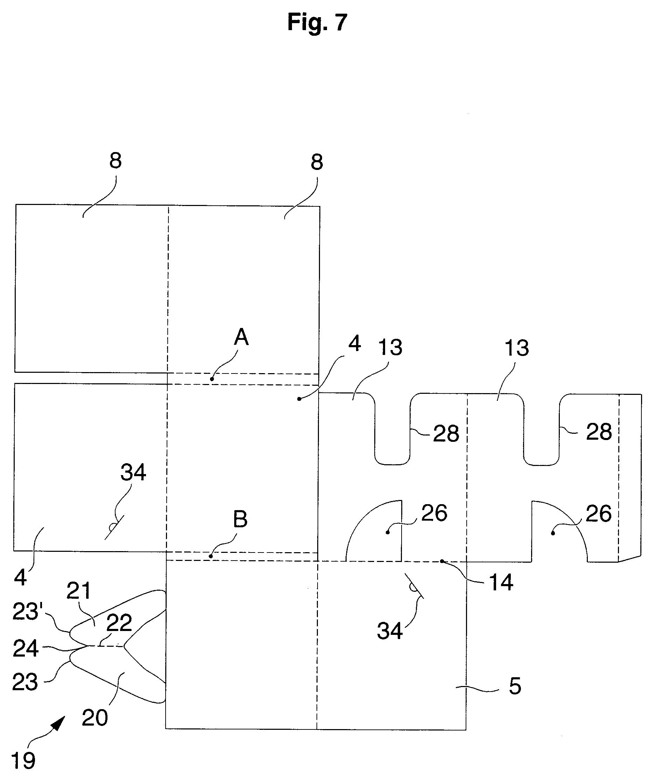

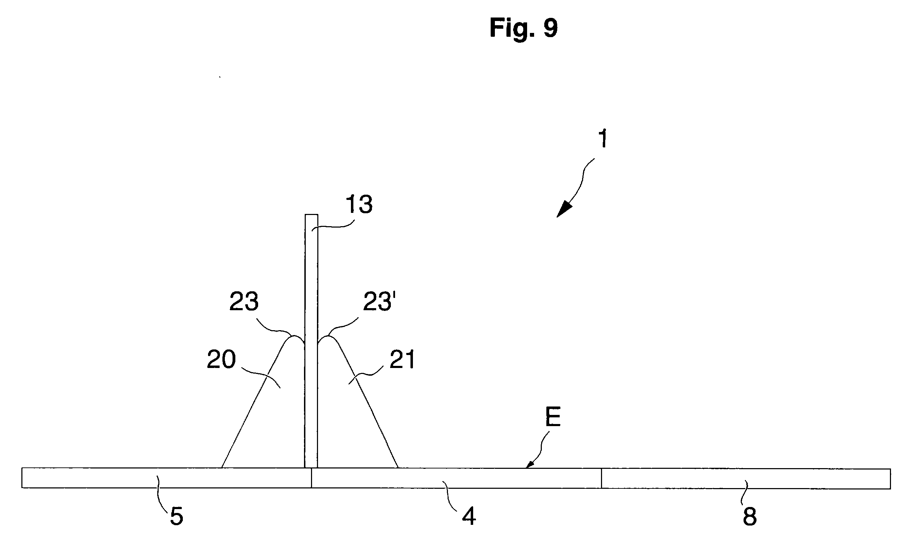

Nunmehr wird anhand der Fig. 7 bis 10 ein drittes Ausführungsbeispiel der erfindungsgemäßen Verpackung erläutert.

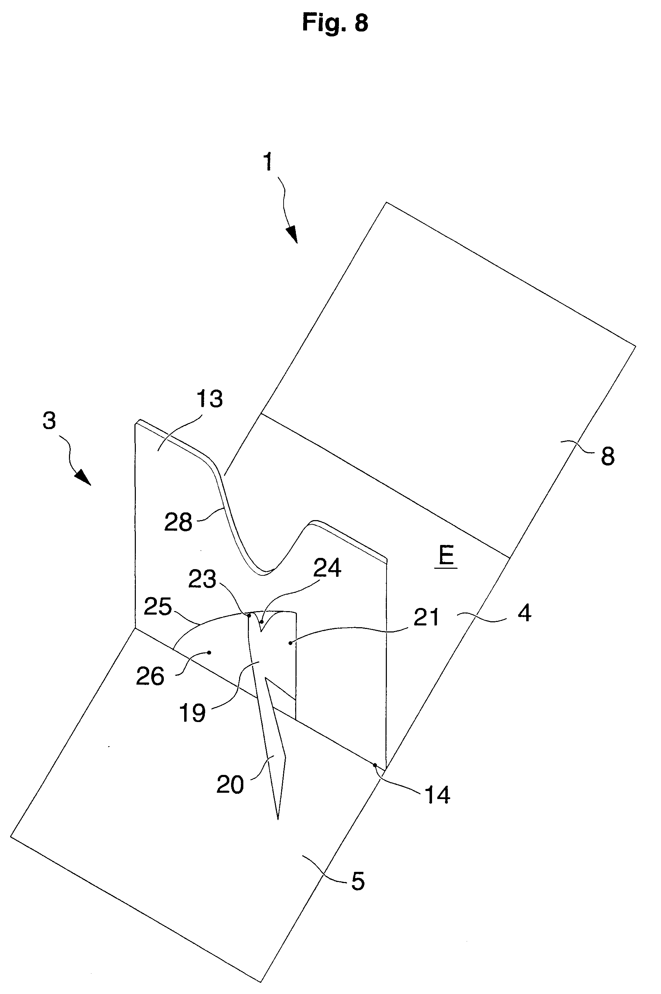

Fig. 8 zeigt eine perspektivische Ansicht des dritten Ausführungsbeispiels der Verpackung 1. Bei diesem Ausführungsbeispiel schließt sich an das Umschlagteil 5 der Bodenteil 4 und der Deckelteil 8 an. Zudem ist zwischen dem Bodenteil 4 und dem Umschlagteil 5 - analog dem ersten Ausführungsbeispiel - eine Einstecktasche 13 für eine Speicherplatte 2 ausgebildet. Die Einstecktasche 13 weist an ihrem oberen offenen Ende eine Eingriffsausnehmung 28 auf, welche entsprechend den jeweiligen Anforderungen unterschiedlich ausgestaltbar ist, wie insbesondere die Fig. 7 und 8 zeigen.

Des weiteren ist die Einstecktasche 13 in ihrem unteren, der Faltlinie 14 zwischen Umschlagteil 5 und Bodenteil 4 zugewandten Bereich mit einer Führungsausnehmung 26 ausgebildet. Die Führunsausnehmung 26 wird durch eine bogenförmige Führungskante 25 innerhalb der Einstecklasche 13 begrenzt. Ein Mitnehmer 19 läuft während des Auf- und Zuklappens der Verpackung entlang der Führungskante 25.

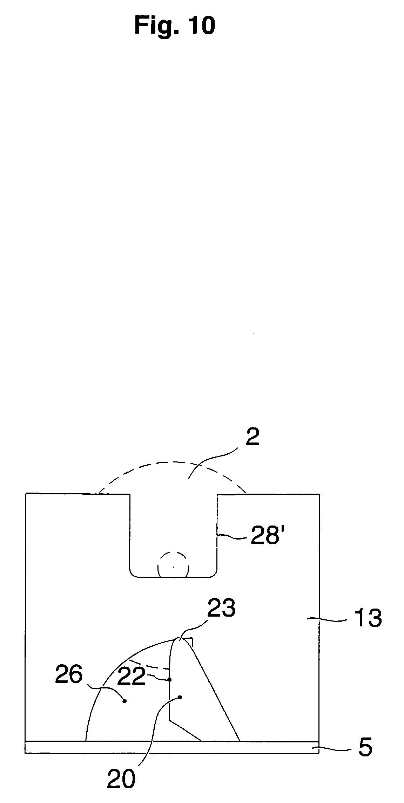

Der Mitnehmer 19 besteht aus zwei symmetrischen Mitnehmerteilen 20 und 21, welche entlang ihrer Symmetrielinie durch eine Falz 22 verbunden sind. Die Mitnehmerteile 20 und 21 sind am Bodenteil 4 bzw. am Umschlagteil 5 befestigt und weisen an ihren der Führungskante 25 zugewandten Teilen Mitnehmernasen 23, 23' auf, welche die Führungskante 25 umgreifen und zwischen sich einen Führungsschlitz 24 festlegen. Der Führungsschlitz 24 dient im aufgeklappten Zustand der Verpackung 1 als Lagerpunkt für eine eingefügte Speicherplatte 2, wie aus Fig. 10 ersichtlich ist.

Obgleich in den Fig. 7 bis 10 die beiden Mitnehmerteile 20 und 21 flügelförmig ausgebildet sind, können natürlich auch andere Formen der Mitnehmerteile, z.B. auch asymmetrische Formen, verwendet werden.

In Fig. 7 ist wiederum der Verpackungszuschnitt der Verpackung 1 entsprechend dem dritten Ausführungsbeispiel dargestellt. Wie unschwer aus Fig. 7 erkennbar, gleicht dieser Verpackungszuschnitt in vielen Teilen dem Verpackungszuschnitt des ersten Ausführungsbeispiels von Fig. 1. Aus diesem Grund werden nur die Unterschiede zum ersten Ausführungsbeispiel erläutert.

Beim Verpackungszuschnitt des dritten Ausführungsbeispiels ist im Gegensatz zum Verpackungszuschnitt des ersten Ausführungsbeispiels kein Materialstreifen 16 vorgesehen, da dessen Funktion im dritten Ausführungsbeispiel durch den Mitnehmer 19 in Verbindung mit der Führungsausnehmung 26 übernommen wird. Aus diesem Grund ist in Fig. 7 auf der linken Seite der Mitnehmer 19 an der linken Hälfte des Umschlagteils 5 ausgeformt und wird vor dem Faltvorgang der Verpackung 1 des dritten Ausführungsbeispiels vom Umschlagteil 5 entfernt. Anschließend wird im zusammengefalteten Zustand des Verpackungszuschnitts von Fig. 7 der Mitnehmer 19 mit seinen "Flügelenden" in die Ausnehmungen 34 des Bodenteils 4 bzw. Umschlagteils 5 eingefügt und darin fixiert. Hierbei ist darauf zu achten, daß die Falz 22 sich in der Erstreckungsebene der Einstecktasche 13 befindet sowie die Mitnehmernasen 23, 23' die Führungskante 25 umgreifen.

Schließlich sei darauf hingewiesen, daß auch bei diesem Ausführungsbeispiel die in der Einstecktasche 13 befindliche Speicherplatte 2 beim Zusammenklappen der Verpackung in die Ebene E des Bodenteils 4 bewegt wird.

Des weiteren kann der Verpackungszuschnitt der erfindungsgemäßen Verpackung 1 wiederum einteilig ausgebildet sein und aus einem Material, wie etwa Karton, bestehen. Hierdurch werden einerseits die Herstellungskosten der erfindungsgemäßen Verpackung verringert und zudem ist die Verpackung recyclebar.

Abschließend wird hinsichtlich der Verpackungszuschnitte der drei Ausführungsbeispiele explizit auf die Fig. 1, 4 und 7 bezug genommen und deren Offenbarungsgehalt somit als zur Beschreibung gehörend angesehen.

## Patentansprüche

1. Verpackung (1) für eine scheibenförmige, optische Speicherplatte (2), insbesondere eine Compact Disc,
- mit einer Halteeinrichtung (3) für die Speicherplatte (2);
- mit zumindest einem Bodenteil (4); und
- mit zumindest einem Umschlagteil (5), das am Bodenteil (4) klappbar angebracht ist und das im auf das Bodenteil (4) geklappten geschlossenen Zustand die Halteeinrichtung (3) zusammen mit dem Bodenteil (4) umgibt,
**dadurch gekennzeichnet,** daß
- die Halteeinrichtung (3) im Zuge des Aufklappens des Umschlagteils (5) vom geschlossenen Zustand in den geöffneten Zustand aus der Ebene (E) des Bodenteils (4) herausbewegbar ist.

2. Verpackung nach Anspruch 1, dadurch gekennzeichnet, daß die Halteeinrichtung (3) eine Trägerplatte (6) und eine daran entlang einer Falzkante (7) klappbar angebrachte Stützplatte (9) aufweist, wobei die Trägerplatte (6) mit ihrer der Falzkante (7) gegenüber angeordneten freien Kante (10) am Umschlagteil (5) befestigt ist und wobei die freie Kante (11) der Stützplatte (9) am Bodenteil (4) befestigt ist.

3. Verpackung nach Anspruch 2, dadurch gekennzeichnet, daß die Trägerplatte (6) eine Haltelasche (12) für die Speicherplatte (2) aufweist.

4. Verpackung nach Anspruch 1, dadurch gekennzeichnet, daß die Halteeinrichtung (3) als Einstecktasche (13) für die Speicherplatte (2) ausgebildet ist.

5. Verpackung nach Anspruch 4, dadurch gekennzeichnet, daß die Einstecktasche (13) im Bereich einer Falzlinie (14) zwischen Bodenteil (4) und Umschlagteil (5) angeordnet ist.

6. Verpackung nach Anspruch 4 oder 5, dadurch gekennzeichnet, daß die Einstecktasche (13) mit einem Mitnehmer (15; 19) verbunden ist, der die Einstecktasche (13) zwischen einer Ruhestellung im aufeinandergeklappten Zustand von Bodenteil (4) und Umschlagteil (5) und einer aus der Ebene (E) des Bodenteils (4) herausbewegten Stellung betätigt.

7. Verpackung nach Anspruch 6, dadurch gekennzeichnet, daß der Mitnehmer (15) ein mittig gefalteter Materialstreifen (16) ist, der an einer freien Kante (17) an der Einstecktasche (13) und an seiner anderen freien Kante (18) am Umschlagteil (5) fixiert ist.

8. Verpackung nach Anspruch 6, dadurch gekennzeichnet, daß der Mitnehmer (19) zwei symmetrische Mitnehmerteile (20, 21) aufweist, die mittels eines Falzes (22) klappbar miteinander verbunden sind, wobei ein Mitnehmerteil (20) am Umschlagteil (5) und das andere Mitnehmerteil (21) am Bodenteil (4) befestigt ist, und wobei die Mitnehmerteile (20, 21) jeweils eine Mitnehmernase (22, 23) aufweisen, die einen Führungsschlitz (24) begrenzen, in den eine Führungskante (25) einer in der Einstecktasche (13) angebrachten Führungsausnehmung (26) eingreift.

9. Verpackung nach einem der Ansprüche 4 bis 6, dadurch gekennzeichnet, daß die Einstecktasche (13) eine Eingriffsausnehmung (27, 28) aufweist.

10. Verpackung nach einem der Ansprüche 1 bis 9, dadurch gekennzeichnet, daß am Bodenteil (4) ein Deckelteil (8) klappbar angebracht ist.

11. Verpackung nach einem der Ansprüche 1 bis 10, dadurch gekennzeichnet, daß alle Komponenten der Verpackung aus einem Material, vorzugsweise Karton, bestehen.

12. Verpackung nach einem der Ansprüche 1 bis 11, dadurch gekennzeichnet, daß die Verpackungszuschnitte der Verpackung einteilig sind.
